Europäisches Patentamt

European Patent Office

Office européen des brevets

(19)

(11) Veröffentlichungsnummer: **0 189 088**
**B1**

(12) # EUROPÄISCHE PATENTSCHRIFT

(45) Veröffentlichungstag der Patentschrift:
**01.06.88**

(51) Int. Cl.⁴: **B 65 G 65/40**, A 01 D 87/12

(21) Anmeldenummer: **86100387.9**

(22) Anmeldetag: **14.01.86**

(54) Silo-Entnahmegerät.

(30) Priorität: **17.01.85 DE 8501082 U**

(43) Veröffentlichungstag der Anmeldung:
**30.07.86 Patentblatt 86/31**

(45) Bekanntmachung des Hinweises auf die Patenterteilung:
**01.06.88 Patentblatt 88/22**

(84) Benannte Vertragsstaaten:
**DE FR NL**

(56) Entgegenhaltungen:
**DE - U - 8 406 846**
**FR - A - 2 282 219**
**US - A - 2 179 549**

(73) Patentinhaber: **KUHN S.A., 4, Impasse des Fabriques,**
**F-67700 Saverne (FR)**

(72) Erfinder: **Oberle, Edmond, 11, rue de Thal Haegen,**
**F-67700 Saverne (FR)**
Erfinder: **Wattron, Bernard, 17, rue des Jardins Haegen,**
**F-67700 Saverne (FR)**

(74) Vertreter: **Weber, Otto Ernst, Dipl.-Phys.,**
**Hofbrunnstrasse 36, D-8000 München 71 (DE)**

ACTORUM AG

## Beschreibung

Die Erfindung betrifft ein Silo-Entnahmegerät nach dem Oberbegriff des Hauptanspruches.

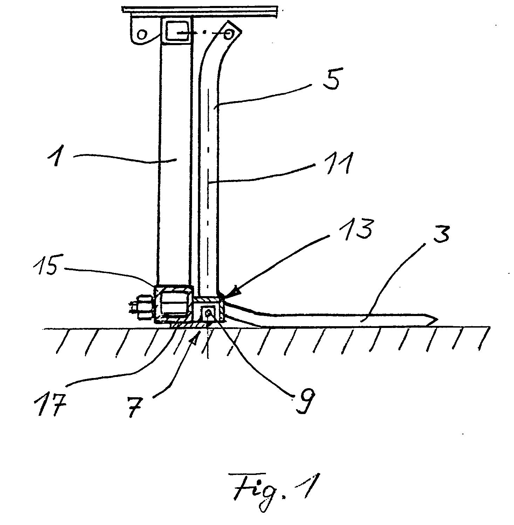

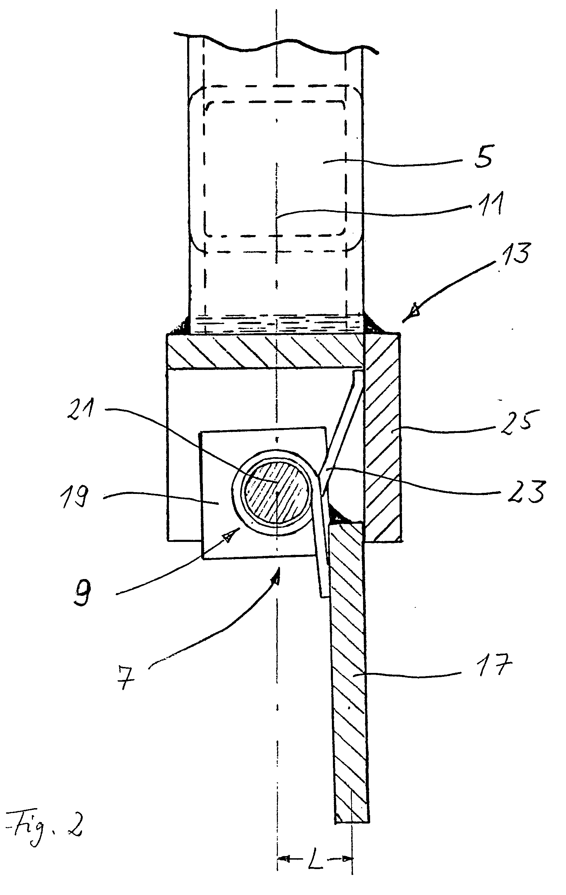

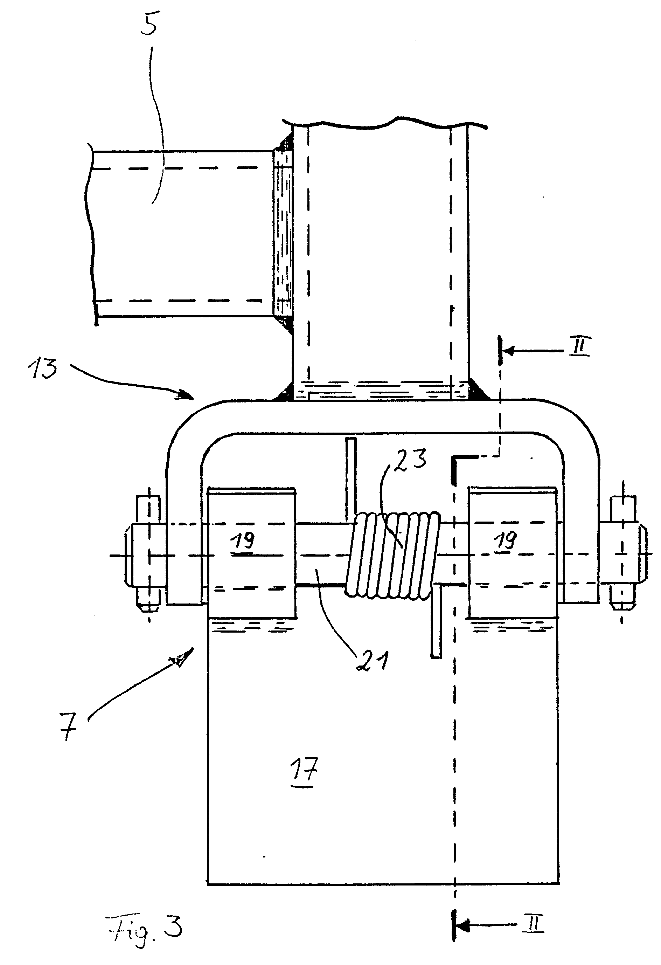

Aus dem DE-GM 8 406 846 ist ein derartiges Silo-Entnahmegerät bekannt, welches ein ebenerdiges Einfahren der Zinkengabel in ein Silo ermöglichen soll. Beim ebenerdigen Einfahren des Gerätes in das Siliergut klappt ein gegenüber der Mittenebene des Entladegitters in Richtung des freien Endes der Zinkengabel versetzt angeordnetes Stabteil entgegen der Einschubbewegung in eine Halterung ab. Diese Halterung erstreckt sich, wie insbesondere aus Fig. 3 ersichtlich ist, relativ weit in Richtung des freien Endes der Zinkengabel. Beim Entladen des im Silo-Entnahmegerät aufgenommenen Silageblockes hakt diese Halterung nach einer Schwenkung des Entladegitters um einen bestimmten Winkel an der Unterseite des Silageblockes ein und reisst beim Wegziehen des Silo-Entnahmegerätes unter dem Silageblock einen Teil des kompakten Gutes heraus. Ein weiterer Nachteil der bekannten Vorrichtung ist darin zu sehen, dass, wie insbesondere in Fig. 4 ersichtlich ist, die Halterung, in welcher das Knickgelenk aufgenommen ist, nach oben offen ist. Beim Wegziehen des Silo-Entnahmegerätes unter dem Silageblock fällt das gelöste Gut in die oben offene Halterung und bewirkt, dass infolge einer Verstopfung des Bereichs um das abklappbare Stabteil die Funktionstüchtigkeit der Vorrichtung nicht mehr gewährleistet ist.

Der Erfindung liegt daher die Aufgabe zugrunde, ein gattungsgemässes Silo-Entnahmegerät zu schaffen, das bei robuster und platzsparender Konstruktion auch für eine ebenerdige Silo-Entnahme ausgelegt ist und dabei sowohl ein betriebssicheres und vollständiges Entladen der aufgenommenen Silage wie auch eine Führungsstabilisierung bei der Aufnahme der Silage ermöglicht.

Diese Aufgabe wird gemäss der Erfindung durch die Merkmale des kennzeichnenden Teils des Anspruches 1 gelöst.

Zwar ist aus der US-PS 2 179 549 ein Rechen mit Abschiebeeinrichtung bekannt, bei dem die Lagerung der Hebelspitzen für das Gitter etwa in der Mittenebene des Gitters vorgesehen ist. Da der dort verwendete Beschlag für die Lagerung der Hebelspitzen am Gitter einen Überstand nach unten aufweist, ist dieser Rechen aber nicht für eine ebenerdige Gutaufnahme und insbesondere nicht für eine ebenerdige Silo-Entnahme geeignet. Auch können diese Hebelspitzen aufgrund der stiftartigen Ausbildung leicht abgebogen werden, so dass die Robustheit und Zuverlässigkeit bei dieser Ausführungsform nicht gegeben ist.

Nach dem Grundgedanken der Erfindung ist der für den Entladevorgang ursächliche, im Schwenklager aufgenommene Hebel in der Mittenebene des Entladegitters angeordnet. Damit wird auf eine zusätzliche Halterung verzichtet, welche beim Entladevorgang hinderlich ist.

Das bislang vorhandene Problem, dass der Hebel in seiner abgeknickten Stellung in Kollision mit dem Rahmen stand, wird gemäss der Erfindung dadurch gelöst, dass der Hebel in seiner abgeknickten (zweiten) Endlage von unten an den Rahmen angelegt angeordnet ist. Damit wird eine kompakte Vorrichtung zu einem vollständigen Entladen der aufgenommenen Silage vorgeschlagen, welche gleichzeitig auch betriebssicher ist, da sie gegenüber einer Verschmutzung durch Silage geschützt ist. Darüber hinaus ermöglicht diese Konstruktion auch die ebenerdige Silo-Entnahme. Dadurch, dass bei der Vorrichtung nach der Erfindung eine in Richtung Zinkengabelende versetzte Halterung entfallen kann, ergibt sich ein weiterer Vorteil daraus, dass das Fassungsvermögen des Silo-Entnahmegerätes etwas vergrössert werden kann.

Die Vorrichtung ist vorteilhafterweise so ausgelegt, dass der Hebel in der zweiten Endlage mit seinem freien, plattenförmigen Endabschnitt von unten gegen den Rahmen horizontal anliegt. Die untere Begrenzungsfläche des plattenförmigen Endabschnittes des Hebels liegt dabei mit der unteren Begrenzung der Gabelzinken in einer Ebene, so dass beim ebenerdigen Einschieben des Silo-Entnahmegerätes in das Silagegut ein Verkanten der Vorrichtung vermieden wird. Die Höhenerstreckung des Rahmens und die Dicke der Platte des Hebels sind aufeinander abgestimmt, so dass die untere Begrenzungsfläche der Platte und die untere Begrenzung der Gabelzinken in einer Ebene liegen. Die ebenerdige Einschub-Bewegung in das Silagegut beim Beladen einerseits und die erforderliche Abstützwirkung beim Entladen der Silage andererseits wird dann problemlos, wenn die Platte eine derartige Längserstreckung aufweist, dass ihr freier Endabschnitt unterhalb eines unteren Querträgers des Rahmens endet. Damit kann auch dem Erfordernis Rechnung getragen werden, dass die Platte des Hebels beim Entladen des Gerätes um eine ausreichende Länge über die untere Begrenzungsebene der Gabelzinken hinaus vorsteht.

In einem vorteilhaften Ausführungsbeispiel ist der im Schwenklager aufgenommene Hebel gegen einen Anschlag, welcher den Schwenkbereich des Hebels in Richtung des freien Endes der Gabelzinken begrenzt, durch eine Feder vorgespannt. Vorzugsweise wird hierbei eine Schraubenfeder vorgesehen, welche um die Schwenkachse des Hebels angeordnet ist. Die Feder drückt mit einem Ende gegen das Verlängerungsstück des Gitters und mit dem anderen Ende gegen den Hebel, der in seiner ersten Endlage gegen den Anschlag des Verlängerungsstückes anliegt.

Ein wesentlicher Vorteil ist auch darin zu sehen, dass die Platte in der ersten Endlage des Hebels gegenüber der Mittelachse des Schwenklagers in Richtung des freien Endes der Gabelzinken versetzt angeordnet ist.

Infolge dieser vorteilhaften Ausgestaltung wird auch dann, wenn der Hebel zu Beginn des Entladevorganges noch nicht unmittelbar an dem Anschlag des Verlängerungsstückes des Gitters anliegen sollte, gewährleistet, dass der Hebel letztlich doch gegen diesen Anschlag angedrückt wird und dass der Entladevorgang betriebssicher durchgeführt werden kann. Durch diese Anordnung wird auch sichergestellt, dass dann, wenn keine Feder zwischen dem Hebel und dem Verlängerungsstück wirkt, ein sicheres Entladen möglich ist. Ein an dem Hebel wirkendes Drehmoment ist durch die versetzte Anordnung der Platte in Richtung des freien Endes der Gabelzinken proportional einer Kraft, die in ihrem Angriffspunkt am unteren Ende der Platte in Richtung des freien Endes der Gabelzinken weist. Durch diese Vorrichtung ist es nahezu ausgeschlossen, dass der Entladevorgang deswegen nicht stattfinden könnte, weil der Kraftangriffspunkt für das Drehmoment beim Entladen nicht wenigstens in der Mittenebene des Gitters liegt. Der Kraftangriffspunkt zum Entladen wird bei der Vorrichtung nach der Erfindung in jedem Fall in Richtung des freien Endes der Gabelzinken verlegt.

Die Erfindung wird nachfolgend anhand der Zeichnung beschrieben, es zeigen:

Figur 1 eine Seitenansicht des Silo-Entnahmegerätes teilweise im Schnitt;

Figur 2 eine Seitenansicht des Schwenkhebels im Verlängerungsstück teilweise im Schnitt und

Figur 3 eine Vorderansicht des Schwenkhebels nach Fig. 2.

In Fig. 1 ist ein Silo-Entnahmegerät gezeigt, welches im wesentlichen aus einem vertikalen Rahmen 1, aus unten am Rahmen befestigten Gabelzinken 3 und einem oben am Rahmen angelenkten Gitter 5 besteht. Das Silo-Entnahmegerät kann in üblicher Weise an einen Schlepper oder eine sonstige landwirtschaftliche Zugmaschine angebaut werden. Der obere Anlenkpunkt des Gitters 5 am Rahmen 1 ist in Richtung des freien Endes der Gabelzinken 3 versetzt, so dass ein im Entnahmegerät aufgenommener Silageblock beim Entladen durch das Gitter 5 möglichst weit nach hinten ausgeschoben werden kann. Am unteren Ende des Gitters 5 ist ein Verlängerungsstück 13 befestigt, welches kurz oberhalb der unten Begrenzungsebene der Gabelzinken 3 endet. Im Verlängerungsstück 13 ist ein Hebel 7 schwenkbar aufgenommen. In der gezeichneten Lage ist der Hebel 7 um das Schwenklager 9 in eine zweite Endlage geschwenkt und liegt von unten gegen einen Querträger 15 des Rahmens 1 an. Das Schwenklager 9 ist so angeordnet, dass es in der Mittenebene 11 des Gitters 5 liegt. Aus der Fig. 1 ist weiterhin ersichtlich, dass die Gabelzinken 3 nach ihrer Durchführung durch den Querträger 15 des Rahmens 1 nach unten abgekröpft sind und sich in dem Bereich, in welchem ein Silageblock (nicht dargestellt) aufgenommen wird, im wesentlichen in einer horizontalen Ebene erstrecken. Die Gabelzinken 3 liegen unten auf dem Erdboden auf. Eine Platte 17, welche den unteren Teil des Hebels 7 bildet, ist in der in Fig. 1 gezeigten zweiten Endlage des Hebels 7 im wesentlichen parallel zu den Gabelzinken 3 ausgerichtet und liegt mit ihrer unteren Begrenzungsfläche in der gleichen Ebene wie die Gabelzinken 3 auf dem Erdboden auf. Die in Fig. 1 gezeigte Lage des Silo-Entnahmegerätes entspricht gleichzeitig der Lage, die das Gerät beim ebenerdigen Einschieben in ein Silogut einnimmt. Das Silo-Entnahmegerät befindet sich in der gezeichneten Stellung in einer sehr weit abgesenkten Lage, so dass es möglich ist, sehr viel von dem direkt auf dem Erdboden liegenden Silogut aufzunehmen. Das Verlängerungsstück 13 mit dem Hebel 7 kann zwischen zwei Gabelzinken 3 oder seitlich eines äusseren Gabelzinkens angeordnet sein.

In Fig. 2 ist der im Verlängerungsstück 13 des Gitters 5 angeordnete Hebel 7 in der ersten Endlage gezeigt. Die mit einer Muffe 19 verbundene Platte 17 des Hebels 7 ragt in der gezeichneten Stellung im wesentlichen vertikal nach unten. Um die Schwenkachse 21 ist eine Schraubenfeder 23 gelegt, die sich mit einem Ende gegen das Verlängerungsstück 13 und mit dem anderen Ende gegen die Platte 17 abstützt. Dabei wird die Platte 17 gegen einen Anschlag 25 des Verlängerungsstückes 13 gedrückt. Aus dieser Figur ist ersichtlich, dass die Platte 17 gegenüber der Mittelachse des Schwenklagers 9 um eine Länge L in Richtung des freien Endes der Gabelzinken (nicht dargestellt) versetzt ist. Damit wird sichergestellt, dass das am unteren Ende der Platte 17 angreifende Drehmoment beim Entladen des Silo-Entnahmegerätes in jedem Fall eine Schwenkbewegung des Gitters 5 bewirkt. Es kann demzufolge selbst dann, wenn der Hebel 7 nicht durch eine Feder in seiner ersten Endlage gesichert ist, nicht vorkommen, dass der Hebel 7 vor dem Entladevorgang in Richtung des Rahmens 1 umklappt. Das Schwenklager 9 ist, wie auch aus Fig. 1 ersichtlich ist, in geringem Abstand über dem Erdboden angeordnet, so dass die wirksame vertikale Erstreckung der Platte 17 in der ersten Endlage (Fig. 2) relativ kurz bemessen werden kann.

Aus Fig. 2 ist auch ersichtlich, dass der Hebel relativ geschützt hinter dem Anschlag 25 angeordnet ist, so dass kaum Silagegut in den Wirkungsbereich des Hebels gelangen kann. Die Erstreckung des Verlängerungsstückes 13 in Richtung des freien Endes der Gabelzinken ist kurz gehalten und es kann auch vorgesehen sein, dass die äussere Seitenfläche des Anschlages 25 mit der dem freien Ende der Gabelzinken zugewandten Begrenzungsfläche des Gitters 5 in einer Ebene liegt.

In Fig. 3 ist das Verlängerungsstück 13 mit dem in der ersten Endlage befindlichen Hebel 7 gezeigt. Es ist veranschaulicht, dass die Fig. 2 eine Schnittansicht gemäss der Schnittlinie II–II darstellt. Aus der Vorderansicht in Fig. 3 ist ersichtlich, dass der Hebel 7 aus zwei Muffen 19 und der daran befestigten Platte 17 besteht. Die Muffen 19 und die Schraubenfeder 23 sind auf der Schwenkachse 21 gelagert, die ihrerseits im unteren Endabschnitt des bügelartig ausgebildeten Verlängerungsstückes 13 aufgenommen und an ihren Endabschnitten verstiftet ist.

**Patentansprüche**

1. Silo-Entnahmegerät mit einem vertikalen Rahmen (1) an welchem unten im Abstand zueinander Gabelzinken (3) befestigt sind, die sich seitlich im wesentlichen in einer horizontalen Ebene erstrecken, mit einem im wesentlichen parallel zum Rahmen (1) auf der den Gabelzinken (3) zugewandten Seite des Rahmens angeordneten Gitter (5), welches im oberen Bereich des Rahmens um eine horizontale Achse schwenkbar angelenkt ist, sich nach unten bis in den Bereich der Gabelzinken (3) erstreckt und wenigstens ein nach unten ragendes Verlängerungsstück (13) aufweist, welches in kurzem Abstand oberhalb der unteren Begrenzung der Gabelzinken (3) endet und in welchem ein Schwenklager (9) angeordnet ist, in dem ein um eine horizontale Achse (21) zwischen einer ersten und einer zweiten Endlage schwenkbarer Hebel (17) aufgenommen ist, dessen Schwenkbereich in Richtung des freien Endes der Gabelzinken (3) durch einen Anschlag (25) des Verlängerungsstückes in der ersten Endlage begrenzt ist, wobei der Hebel in der ersten Endlage im wesentlichen vertikal gerichtet ist und über die untere Begrenzungsebene der Gabelzinken hinaus vorsteht, dadurch gekennzeichnet, dass das Schwenklager (9) des Hebels (7) im wesentlichen in der Mittenebene (11) des Gitters (5) angeordnet ist, dass der Hebel (7) aus wenigstens einer die Schwenkachse (21) umgreifenden Muffe (19) und einer an der Muffe (19) befestigten Platte (17) gebildet ist und dass in der zweiten Endlage des Hebels (7) die Platte (17) von unten gegen den Rahmen (1) nahezu horizontal anliegend angeordnet ist, wobei ihre untere Begrenzungsfläche mit der unteren Begrenzung der Gabelzinken (3) annähernd in einer Ebene liegt.

2. Silo-Entnahmegerät nach Anspruch 1, dadurch gekennzeichnet, dass eine den Hebel (7) gegen den Anschlag (25) in die erste Endlage andrückende Feder (23) vorgesehen ist.

3. Silo-Entnahmegerät nach Anspruch 2, dadurch gekennzeichnet, dass die Feder (23) eine um die Schwenkachse (21) des Hebels (7) angeordnete Schraubenfeder ist.

4. Silo-Entnahmegerät nach einem der Ansprüche 1 bis 3, dadurch gekennzeichnet, dass die Platte (17) eine derartige Längserstreckung aufweist, dass ihr freier Endabschnitt unterhalb eines unteren Querträgers (15) des Rahmens (1) endet.

5. Silo-Entnahmegerät nach einem der Ansprüche 1 bis 4, dadurch gekennzeichnet, dass die Platte (17) in der ersten Endlage des Hebels (7) gegenüber der Mittelachse des Schwenklagers (9) in Richtung des freien Endes der Gabelzinken (3) versetzt angeordnet ist.

## Claims

1. A silage withdrawal apparatus having a vertical frame (1) to which fork tines (3) are fastened at intervals at the bottom, which extend to the side essentially in one horizontal plane, having a grating (5) which is arranged essentially in parallel with the frame (1) on the side of the frame next the fork tines (3) and which is hinged pivotally about a horizontal axis in the upper region of the frame, extends downwards as far as into the region of the fork tines (3) and exhibits at least one extension piece (13) projecting downwards, which ends at a short distance above the bottom boundary of the fork tines (3) and in which is arranged a pivot bearing (9) in which a lever (17) is received to be able to swing about a horizontal axis (21) between a first and a second end position, its range of swing in the direction of the free end of the fork tines (3) being limited in the first end position by a stop (25) on the extension piece and the lever in the first end position being directed essentially vertically and projecting beyond the bottom boundary plane of the fork tines, characterized in that the pivot bearing (9) of the lever (7) is arranged essentially in the central plane (11) of the grating (5), that the lever (7) is formed from at least one bush (19) embracing the axis of swing (21) and a plate (17) fastened to the bush (19), and that in the second end position of the lever (7) the plate (17) is arranged to rest nearly horizontal against the frame (1) from below, its bottom boundary area lying approximately in one plane with the bottom boundary of the fork tines (3).

2. A silage withdrawal apparatus as in Claim 1, characterized in that a spring (23) is provided to press the lever (7) against the stop (25) in the first end position.

3. A silage withdrawal apparatus as in Claim 2, characterized in that the spring (23) is a spiral spring arranged round the axis of swing (21) of the lever (7).

4. A silage withdrawal apparatus as in one of the Claims 1 to 3, characterized in that the plate (17) exhibits a longitudinal reach such that the free end portion of it ends below a bottom crossbearer (15) of the frame (1).

5. A silage withdrawal apparatus as in one of the Claims 1 to 4, characterized in that the plate (17) in the first end position of the lever (7) is arranged offset with respect to the centreline of the pivot bearing (9) in the direction of the free end of the fork tines (3).

## Revendications

1. Désileuse comportant un châssis (1) vertical muni dans sa partie inférieure de dents de fourche (3) espacées entre elles et qui s'étendent latéralement notamment dans un plan horizontal, une grille (5) sensiblement parallèle au châssis (1) située sur le côté du châssis orienté vers les dents de fourche (3), laquelle grille est articulée dans la partie supérieure du châssis de manière à pouvoir pivoter autour d'un axe horizontal, s'étend vers le bas jusque dans la région des dents de fourche (3) et présente au moins une pièce de prolongement (13) dirigée vers le bas, laquelle pièce se termine à une faible distance au-dessus de la limite inférieure des dents de fourche (3) et dans laquelle est monté un palier pivotant (9) comportant un levier (17) pivotant autour d'un axe horizontal (21) entre une première et une deuxième position extrême et dont la zone de pivotement dans la direction de l'extrémité libre des dents de fourche (3) est limitée dans la première position extrême par une butée (25) de la pièce de prolongement, lequel levier est sensiblement vertical et dépasse le plan passant par la limite inférieure des dents de fourche dans la première position extrême, caractérisée par le fait que le palier pivotant (9) du levier (7) est situé sensiblement dans le plan médian (11) de la grille (5), que le levier (7) est constitué d'au moins un manchon (19) entourant l'axe de pivotement (21) et d'une plaque (17) fixée au manchon (19) et que dans la deuxième position extrême du levier (7) la plaque (17) est sensiblement horizontale et se place par le bas contre le châssis (1), sa face inférieure et la limite inférieure des dents de fourche (3) étant situées approximativement dans un même plan.

2. Désileuse selon la revendication 1, caractérisée par le fait qu'il est prévu un ressort (23) poussant le levier (7) contre la butée (25) dans la première position extrême.

3. Désileuse selon la revendication 2, caractérisée par le fait que le ressort (23) est un ressort de torsion disposé autour de l'axe de pivotement (21) du levier (7).

4. Désileuse selon l'une des revendications 1 à 3, caractérisée par le fait que la plaque (17) présente une longueur telle que son extrémité libre se termine en-dessous d'un support transversal (15) inférieur du châssis (1).

5. Désileuse selon l'une des revendications 1 à 4, caractérisée par le fait que dans la première position extrême du levier (7) la plaque (17) est décalée par rapport à l'axe central du palier pivotant (9) dans la direction de l'extrémité libre des dents de fourche (3).

Fig. 1

Fig. 2

Fig. 3